# EUROPEAN PATENT APPLICATION

(11) **EP 2 808 697 A1**
(43) Date of publication of application: **03.12.2014**
(21) Application number: 14170201.9
(22) Date of filing: 28.05.2014
(51) Int. Cl.: G01S 13/72, G01S 13/93, G01S 7/24

(54) **Radar device and method of acquiring and tracking target**

(30) Priority: 31.05.2013 JP 2013115566
(71) Applicant: FURUNO ELECTRIC CO., LTD., Nishinomiya-City, Hyogo 662-8580 (JP)
(72) Inventor: Nomura, Hiroyuki, Nishinomiya-City, Hyogo 662-8580 (JP)
(74) Representative: Hoffmann, Jörg Peter

(57) **Abstract**

A radar device (1) is provided, which includes an extractor (41) configured to extract a representative point of a target from a radar echo, a representative point memory (42) configured to store the representative points extracted by the extractor (41), for a plurality of scans, an estimator (43) configured to estimate movement information on the target indicated by the representative points based on the information stored in the representative point memory (42), a determinator (44) configured to determine a possibility of a collision based on the movement information on the target estimated by the estimator (43), and an acquisition-and-tracking module (45) configured to acquire and track the target determined to have the possibility of a collision by the determinator (44).

## Description

### Technical Field

The present invention relates to a radar device, which primarily has a function to acquire and track a target.

### Background of the Invention

Conventionally, radar devices have been known, which have a "Target Tracking (TT)" function to track a target based on an echo signal received by a radar antenna. Here, the TT-function is, describing briefly, to detect a transition of the position of a target which exists around a ship, which equips the radar device (hereinafter, simply referred to as "the ship"), based on a transition of past radar images. By this TT-function, for example, a target with a possibility of a collision with the ship can be displayed along with a predetermined symbol.

Acquisition of the target can be conducted manually or automatically. If the target is to be acquired manually, a user or an operator selects an arbitrary target displayed on the radar image. The radar device then acquires the selected target and continues tracking. On the other hand, if the target is to be acquired automatically, the radar device automatically acquires a target which, for example, enters into a predetermined area and continues tracking.

When the target is acquired automatically, targets are acquired one after another without any user operations. Therefore, if a great number of targets which satisfy automatic tracking criteria exist, the great number of targets are acquired. Since the number of acquirable targets is normally limited, it is necessary to select one or more targets for which the tracking is going to be suspended. Conducting this manual operation increases the user's burden. JP2004-309246A and JP2534785B disclose radar devices which automatically suspend tracking of a target based on the possibility of a collision or the like.

Particularly, JP2004-309246A discloses a radar signal processing device which sets a predetermined area behind the ship, and when a tracking target enters into this area, the device suspends the tracking of the target. Further, this radar signal processing device determines the possibility of a collision, and if there is the possibility of a collision, the device does not suspend the tracking even if the target is located within the area.

JP2534785B discloses an automatic tracking device which also determines the possibility of a collision similar to JP2004-309246A. This automatic tracking device automatically suspends tracking of a target with a low possibility of a collision.

Here, in JP2004-309246A and JP2534785B, a velocity vector (a course and a speed) of the target is estimated. Specifically, after the acquisition of the target, the velocity vector of the tracking target is calculated based on a later-obtained new radar echo. Therefore, the velocity vector, which is accurate, cannot be calculated for a while after the acquisition of the target.

On the other hand, in JP2000-304853A, the past target data are stored, and a current velocity vector of a specific target which is specified by a user is calculated with the use of the past target data which are traced back. Thus, the target's speed can immediately be displayed after the target is specified by the user.

Meanwhile, in JP2004-309246A and JP2534785B, although processing which cancels the tracking after the acquisition of the target is disclosed, it needs the processing which suspends the acquisition and the tracking even for target(s) which do not need the tracking and, thus, data to be processed of a processor increases. In addition, in JP2004-309246A and JP2534785B, tracking of the same target may be started after the suspension of the tracking.

Further, in JP2000-304853A, since processing which calculates a velocity vector of a target, using the specifying of the target by the user as a trigger, has been started, the necessity of the tracking of the target which exists around the ship cannot be determined. Further, in JP2000-304853A, since it is necessary to always store the data for a predetermined number of scans, a large memory area must be necessary.

### Summary of the Invention

The present invention is made in view of the above situations, and it provides a radar device, from which processing of a suspension of tracking of a target which is unnecessary to be tracked, is omitted, while automatically acquiring and tracking a necessary target.

According to one aspect of the invention, a radar device is provided, which includes an extractor configured to extract a representative point of a target from a radar echo, a representative point memory configured to store the representative points extracted by the extractor, for a plurality of scans, an estimator configured to estimate movement information on the target indicated by the representative points based on the information stored in the representative point memory, a determinator configured to determine a possibility of a collision based on the movement information on the target estimated by the estimator, and an acquisition-and-tracking module configured to acquire and track the target determined to have the possibility of a collision by the determinator.

Thus, a target with the possibility of a collision, i.e., a target with a high necessity of tracking, is automatically made to be a subject of tracking. In other words, "processing which excludes a target which does not need to be tracked from candidates to be tracked" can be omitted. Therefore, a user's burden or data to be processed by a processor can be reduced.

The determinator may determine the possibility of a collision based on whether the movement information on the target estimated by the estimator satisfies a predetermined collision possibility determination criterion.

Thus, the possibility of a collision between the radar device and the target can be determined based on a certain criterion. Further, the device can be applied to various applications by changing the collision determination criterion or criteria.

The determinator may determine the possibility of a collision, for the target located within a predetermined determination area.

The data to be processed will increase if the possibilities of collisions are determined for targets located in all areas. Therefore, the increase in the data to be processed is suppressed by restricting the processing to targets within the predetermined determination area.

The predetermined determination area may be defined to be an area within a predetermined distance from the radar device.

Since a target located far away from the radar device requires a long period of time until it approaches the radar device, it is difficult to accurately perform the determination. For this reason, the necessity of the determination for the target is low. Therefore, the increase in the data to be processed can be suppressed by only determining a target near the radar device.

The determination area may be defined to be an area specified by a user.

Thus, the possibility of a collision can be determined for a range according to a user's application and/or ship's traveling conditions.

The movement information on the target may include a course and a speed of the target.

Thus, the possibility of a collision between the radar device and the target can be determined with sufficient accuracy.

The representative point memory may store a position of the representative point and a size of the target corresponding to the representative point.

Thus, the target can be identified with sufficient accuracy by utilizing the sizes of the target corresponding to representative points at each past time points, when the estimator identifies a predetermined target in the past scans.

The representative point memory may store a length in an azimuth direction, a length in a distance direction, and an area, along with time information, as the size of the target corresponding to the representative point.

Thus, the estimator can identify the target much more accurately by using the values described above.

The radar device may further include an antenna position acquirer configured to acquire a mounted position of a radar antenna. The representative point memory may store an absolute position of each of the representative points that is obtained based on a relative position of the representative point with respect to the radar device and the mounted position of the radar antenna.

Thus, the estimator can estimate the movement information on the target more accurately.

The determinator may determine the possibility of a collision, for the target that is determined based on at least one of the size and the movement information.

Thus, since noise or the like can be excluded, the targets for which the possibility of a collision is determined decrease. Therefore, the data to be processed can be reduced.

The determinator may determine the possibility of a collision, for the target that is determined based on the movement information. The estimator may terminate the estimation of the movement information on the target if there is no possibility of a collision, during the estimation of the movement information on the target while tracing back the past scans.

Thus, since unnecessary processing by the estimator can be omitted, the data to be processed can be reduced.

The radar device may further include a display unit configured to display a radar image, and a display controller configured to display the target determined to have the possibility of a collision by the determinator, in a discriminated manner from another target.

Thus, since the user can visually acknowledge the target with the possibility of a collision easily, he/she can create a route to avoid the target intuitively and easily.

The display controller may display the target determined to have no possibility of a collision by the determinator, and the target for which the determination by the determinator has not been carried out, in a discriminated manner from each other.

Since the user can be notified about the target determined to be a low possibility of a collision, the user can feel relieved.

In the radar device, one of a mode in which the target determined to have the possibility of a collision by the determinator is acquired and tracked and a mode in which the target is acquired and tracked without the determination by the determinator may be configured to be selectable.

Thus, the mode of the present invention and the conventional mode can selectively be used as needed.

According to another aspect of the invention, a method of acquiring and tracking a target is provided, which includes extracting a representative point of the target from a radar echo, storing the extracted representative point over a plurality of scans, estimating movement information on the target indicated by the representative point, based on the stored information, determining a possibility of a collision based on the estimated movement information on the target, and acquiring and tracking the target determined to have the possibility of a collision.

Thus, only a target with the possibility of a collision, i.e., only a target with a high necessity of tacking, is automatically made to be a subject of tracking. In other words, "processing which excludes a target which does not need to be tracked from candidates to be tracked" can be omitted. Therefore, a user's burden or data to be processed of a processor can be reduced.

### Brief Description of the Drawings

The present disclosure is illustrated by way of example and not by way of limitation in the figures of the accompanying drawings, in which the like reference numerals indicate like elements and in which:
Fig. 1 is a block diagram of a radar device according to one embodiment of the invention;
Fig. 2 is a flowchart illustrating processing which automatically acquires and tracks a target;
Fig. 3 is a view schematically illustrating processing which obtains a representative point, an area and the like from a radar echo;
Figs. 4A and 4B are tables illustrating information stored in a determination criteria memory;
Fig. 5 is a view illustrating a circumstance where movement of a target is estimated based on past scanning data; and
Fig. 6 is a view illustrating an image which is displayed on a display unit.

### Detailed Description

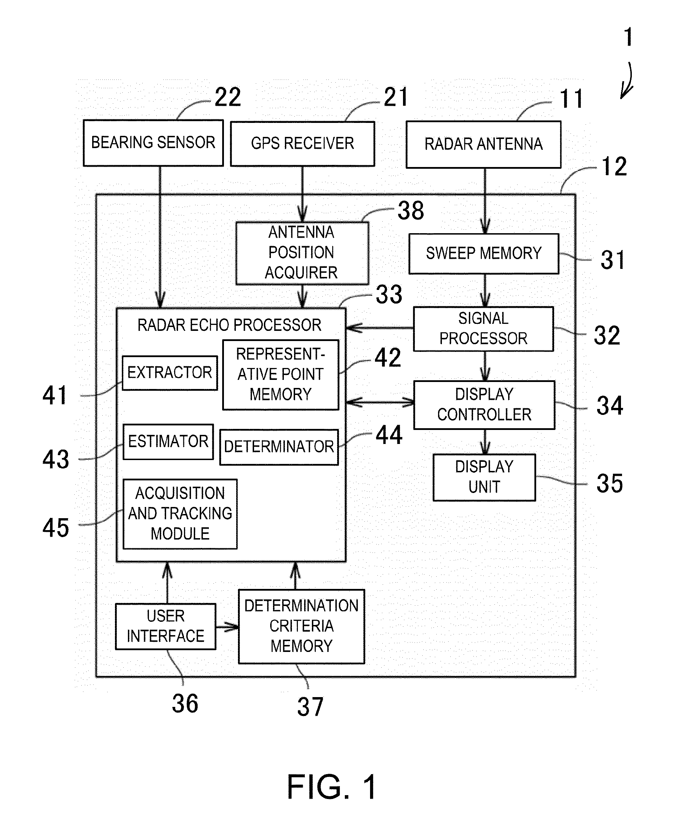

Next, one embodiment of the present invention is described with reference to the accompanying drawings. Fig. 1 is a block diagram of a radar device 1 according to one embodiment of the invention.

As illustrated in Fig. 1, the radar device 1 includes a radar antenna 11 and a radar indicator 12.

The radar device 1 is comprised of a pulse radar device in this embodiment. The radar antenna 11 transmits a pulse-shaped radio wave with a strong directivity, and then receives a reflected wave (radar echo) which is obtained by the pulse-shaped radio wave reflected and returned on/to a target. The radar antenna 11 repeats the transmission and the reception of the radio wave, while swiveling in a horizontal plane. Thus, the radar device 1 can scan along the horizontal plane throughout 360° centering on a ship which equips the radar device 1. The term "a ship which equips the radar device 1" as used herein is simply referred to as "the ship." Further, the term "targets" as used herein refers to any objects or lives that are detectable by the radar device 1, and the term "detectable" as used herein includes acquisition and/or tracking.

The radar echo received by the radar antenna 11 is outputted to a sweep memory 31 in the radar indicator 12. The sweep memory 31 can store data for one revolution of the swiveling of the radar antenna 11. Since the data for one revolution of the radar antenna 11 is data obtained by scanning along the horizontal plane throughout 360° centering on the ship, data indicative of a situation of the target around the ship will be stored in the sweep memory 31.

A signal processor 32 applies processing, such as a gain adjustment, a removal of sea clutter and the like, and a scan-to-scan correlation, to the data stored in the sweep memory 31. The signal processor 32 outputs the radar echo after the signal processing to a TT-processor 33.

The TT-processor 33 determines the possibility of a collision of the ship with the target(s) around the ship based on the signal-processed radar echo, and if the TT-processor 33 determines that there is the possibility of a collision, it performs the processing which acquires and tracks the target(s). The TT-processor 33 includes, as components which perform this processing, an extractor 41, a representative point memory 42, an estimator 43, a determinator 44, and an acquisition-and-tracking module 45. Note that the details of this processing performed by these components will be described later. The TT-processor 33 outputs information on the tracking of the target(s) to a display controller 34.

The display controller 34 can create a radar image by performing known signal processing based on the signal-processed radar echo. Specifically, the display controller 34 acquires a distance to the target based on a time difference between a timing at which the radar antenna 11 transmits the pulse-shaped radio wave and a timing at which the echo is received. Further, the display controller 34 acquires a bearing (azimuth) in which the target exists, based on a horizontal direction of the radar antenna 11 when the echo is received (a transceiving direction of the pulse-shaped radio wave). Further, the display controller 34 can display on a radar image the information on tracking of the target which is inputted from the TT-processor 33.

A display unit 35 is comprised of, for example, a liquid crystal display, and can display the image created by the display controller 34.

A user interface 36 is comprised of key(s), a mouse, a trackball, and/or a touch panel, and can receive a user's input. The user interface 36 converts an accepted input into an electrical signal, and then outputs it to the TT-processor 33 and a determination criteria memory 37.

The determination criteria memory 37 stores references or criteria which are used for the determination of the possibility of a collision of the ship with the target.

The radar indicator 12 is connected with a GPS receiver 21 and a bearing sensor 22.

The GPS receiver 21 acquires positioning signals transmitted from GPS Satellites through a GPS antenna (not illustrated) and then performs a positioning calculation based on the positioning signals to detect an absolute position of the ship (in detail, an absolute position of the GPS antenna). The GPS receiver 21 outputs the detected position of the ship to the TT-processor 33.

The bearing sensor 22 detects a bow direction (heading) of the ship as an absolute bearing or azimuth in the Terrestrial Reference System. The bearing sensor 22 may be comprised of a magnetic bearing sensor or a GPS compass. The bearing sensor 22 outputs the detected ship's heading to the TT-processor 33.

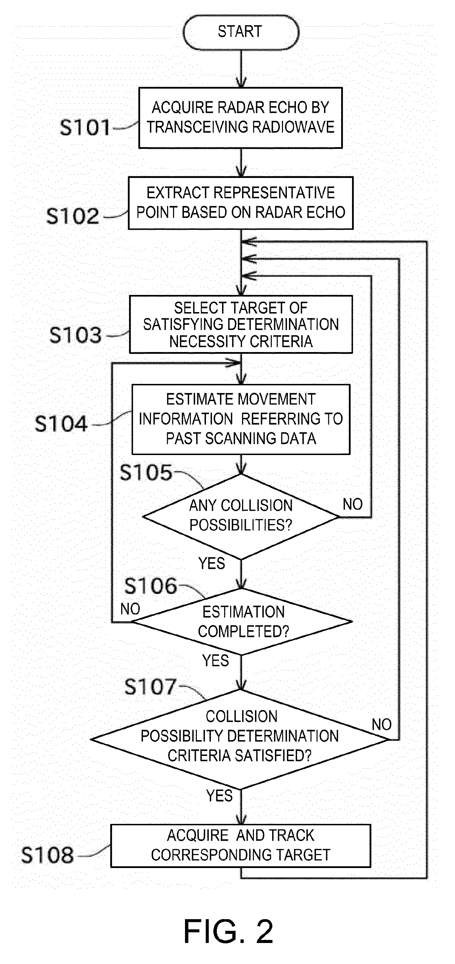

Next, the details of processing performed by the TT-processor 33 are described with reference to a flowchart of Fig. 2.

The TT-processor 33 first acquires the signal-processed radar echo from the signal processor 32 as described above (S101).

Next, the extractor 41 of the TT-processor 33 extracts a representative point of a target from the acquired radar echo (S102). Here, the representative point is a point (the position of a point) extracted from the radar echo indicative of the target by using predetermined criterion or criteria. In this embodiment, although the center of the radar echo is used as the representative point, other location may also be used.

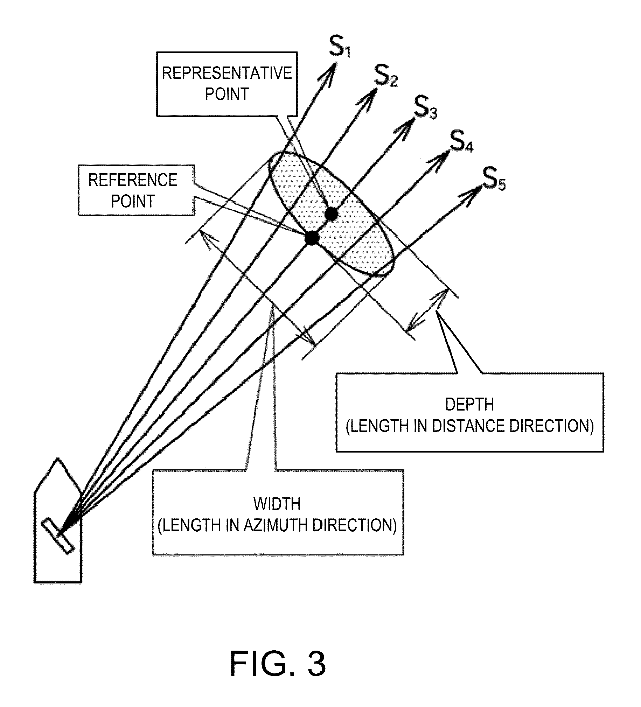

In detail, the extractor 41 first detects a reference point illustrated in Fig. 3, a depth of the radar echo (a length in a distance direction), and a width of the radar echoes (a length in an azimuth direction), based on the radar echoes. By calculating these values, various values, such as the center of the radar echoes (in this embodiment, the representative point) and an area of the radar echoes, can be calculated. Note that, since the radar echo is a reflected wave, the position of the reference point which is a rising edge of the reflected wave can be obtained with sufficient accuracy. Therefore, the extractor 41 is to obtain the reference point in the beginning, instead of the representative point. The extractor 41 obtains the representative point and the size of each target (e.g., the width, the depth, and the area) for every scan, and then stores them in the representative point memory 42 along with an observation time (time information).

Note that the position of the representative point obtained from the radar echo is a relative position with respect to the ship. However, in this embodiment, since the absolute position of the GPS antenna is obtained by the GPS receiver 21, the absolute position of the radar antenna 11 is obtained based on the absolute position and a spatial relationship between the GPS antenna and the radar antenna 11. An antenna position acquirer 38 acquires the absolute position of the radar antenna 11 obtained as described above, and then outputs it to the TT-processor 33. Thus, the TT-processor 33 can obtain the absolute position of the representative point based on the relative position of the representative point, and the absolute position of the radar antenna 11, and then store it in the representative point memory 42.

Next, the TT-processor 33 selects the target which satisfies determination necessity criteria (S103). The term "determination necessity criteria" as used herein refers to criterion or criteria to determine the target to be determined for "the existence of the collision with the ship," which are selected from the representative points stored in the representative point memory 42. Thus, since the target which has no possibility or very few possibility of a collision with the ship will not be the subject of the determination, the data to be processed can be reduced.

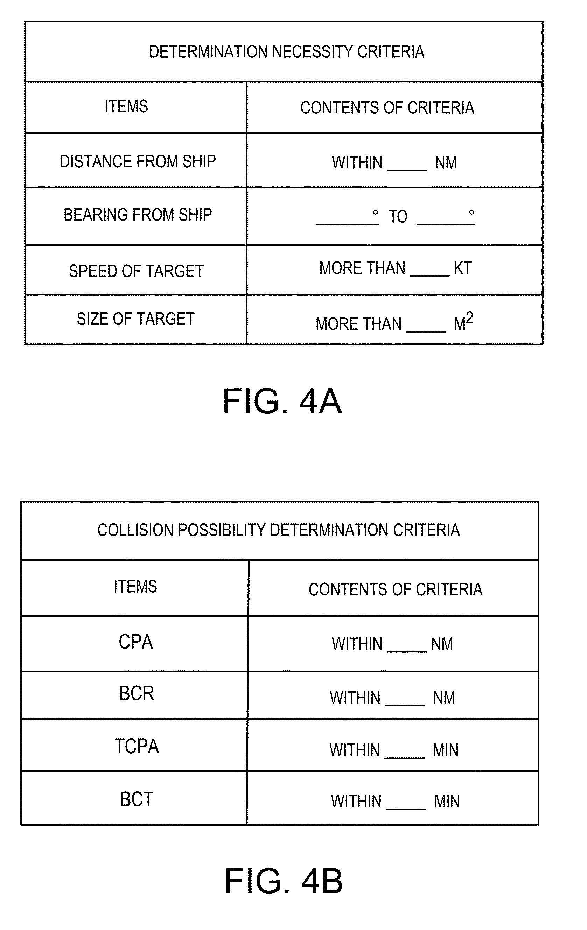

In this embodiment, the determination necessity criteria is comprised of items and item contents (criteria) illustrated in Fig. 4A, and are stored in the determination criteria memory 37. In the example of Fig. 4A, the items such as "Distance From The Ship," "Bearing From The Ship," "Speed of Target," and "Size of Target" are listed. Note that the items described herein are merely examples, and they may be suitably added, altered or modified, or one or some items may be eliminated. The items and the criteria may also be adjusted or changed by a user operating the user interface 36.

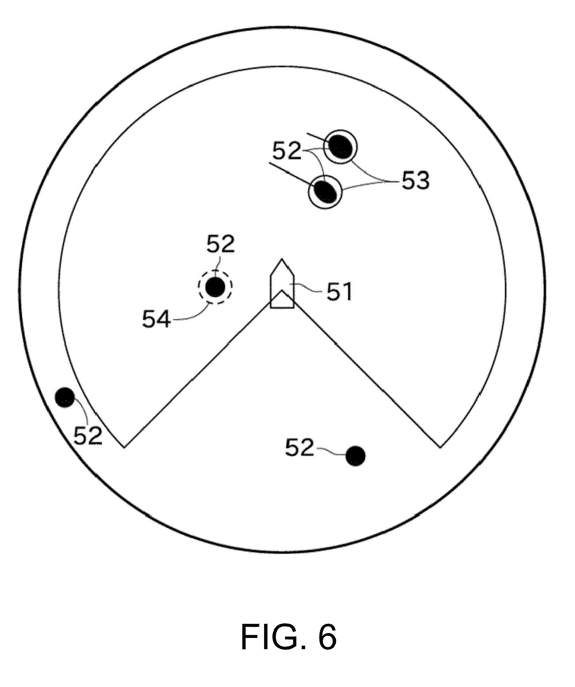

The "Distance From The Ship" and "Bearing From The Ship" are the items to determine the area for which the existence of the collision is to be determined ("a determination area," see Fig. 6). For example, it is difficult for a target very far from the ship, which takes a long period of time until it approaches the ship, to determine the possibility of a collision with sufficient accuracy. Therefore, the increase in the data to be processed may also be suppressed by limiting the determination area to a predetermined distance. Further, since the possibility of a collision with the ship is low for the target located behind the ship, the increase in the data to be processed may be suppressed by excluding a rearward area of the ship from the determination area.

"Speed of Target" and "Size of Target" are to determine the target to be determined for the existence of a collision based on the information on the target. For example, if the speed of the target is very slow, since this target has a high possibility to be a rock or rocks, a route buoy or the like, the processing which determines the possibility of a collision with the ship may be omitted. Further, if the size of the target is small, since the target may be noise, the processing which determines the possibility of a collision with the ship may also be omitted.

The TT-processor 33 selects is one target from the representation data stored in the representative point memory 42, which satisfies the determination necessity criteria (S103). The estimator 43 of the TT-processor 33 estimates movement information on the selected target based on the past scanning data (S104). Note that, in this embodiment, although the course and the speed of the target are obtained as the movement information, other values may also be obtained.

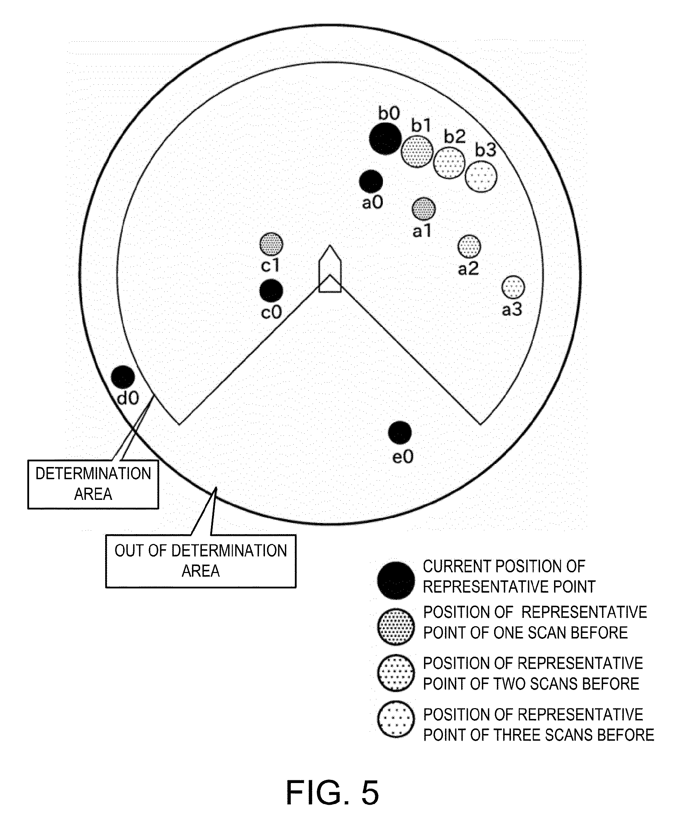

Specifically, the estimator 43 reads data related to the current position (representative point) and the size of the target, as well as the position and the size of the target which were obtained from the scanning data of the last scan, as illustrated in Fig. 5. For example, when a target "a" is selected by the processing of S103, the estimator 43 searches for a target which is near the current target "a" (a symbol "a0"), and is close to the size of the target "a" in the last scanning data. Thus, the estimator 43 can detect the last position of the target "a" of one scan before (a symbol "a1"). Note that, in this embodiment, since not only the position of the target but the size of the target is taken into the consideration, not a target "b" of one scan before (a symbol "b1") but the target "a" of one scan before can appropriately be detected.

Next, the determinator 44 of the TT-processor 33 determines whether there is the possibility of a collision (even if it is a small chance) based on the position of the target "a" of one scan before (S105). If the determinator 44 determines that there is the possibility of a collision even if it is a small chance, the estimator 43 repeats the processing of S104 which obtains the past position of the target until the estimation of the movement information on the target is completed (that is, until the completion of tracing back of a predetermined number of the past scanning data). Thus, since the transition of the position of the target "a" can be obtained, the course and the speed of the target "a" can be estimated.

Note that, in the processing of S105 which determines whether there is the possibility of a collision, if it is determined that there is no possibility of a collision, the processing is suspended without tracing back the past scanning data all way to the final data. For example, as for a target "c," by obtaining the position of the target "c" of one scan before (a symbol "c1"), it can be determined that the target "c" has already passed by the ship. In this case, the possibility of a collision of the ship with the target "c" is very low. Therefore, the data to be processed can be reduced by terminating the processing which traces back the past scanning data.

By the above processing, the movement information can be obtained for a target of which the representative point is extracted and of which the possibility of a collision is at least a few.

Next, the determinator 44 of the TT-processor 33 determines whether there is a possibility of a collision with the target for which the movement information is obtained (S107). This determination is performed based on the collision possibility determination criteria (Fig. 4B) which are defined in advance and stored in the determination criteria memory 37 in this embodiment.

The collision possibility determination criteria illustrated in Fig. 4B are comprised of items of "CPA," "BCR," "TCPA" and "BCT." Note that the term "CPA" as used herein in an abbreviation of "Closest Point of Approach," and it indicates a distance between the ship and the target when the target approaches the ship the closest. Further, the term "TCPA" as used herein is an abbreviation of "Time to CPA," and it indicates a period of time until the ship and the target approach the closest. Note that the items listed herein are merely examples and may suitably be added, altered, modified or changed, or one or some items may be eliminated. Alternatively or additionally, the items and the criteria may also be changed by the user operating the user interface 36.

The term "BCR" as used herein is an abbreviation of "Bow Crossing Range," and it indicates a distance between the ship and the target when the target crosses ahead of the ship (i.e., the bow direction of the ship). BCR can easily be obtained, if the relative velocity vector of the target with respect to the ship is known. Further, the term "BCT" as used herein is an abbreviation of "Bow Crossing Time," and it indicates a period of time until the target finishes crossing the bow direction of the ship.

These values are typically used when determining the possibility of a collision, and smaller values indicate a shorter distance between the ship and the target, and a shorter period of time until the ship and the target approach to each other. The determinator 44 determines whether there is the possibility of a collision based on these values. In this determination, it may be determined that there is the possibility of a collision when the criteria of four items illustrated in Fig. 4B are satisfied, or it may be determined that there is the possibility of a collision when the criterion of one item is satisfied.

Next, the acquisition-and-tracking module 45 of the TT-processor 33 performs acquisition and tracking of the target which the determinator 44 determined to be "there is the possibility of a collision" at S107. This tracking function is also referred to as TT (Target Tracking) or ARPA (Automatic Radar Plotting Aid).

Since the TT-function is known, its detailed description is omitted, but this function is to automatically acquire the position of the target, which transits with time, based on the data outputted from the signal processor 32 and the representative point memory 42, and estimate the velocity vector by tracking the movement of the target based on the time-wise transition.

After the existence of the acquisition is determined by the acquisition-and-tracking module 45 of the TT-processor 33, the processing returns to S103 to select a new target. By repeating the above sequence of processing, the acquisition and the tracking are only performed for the target(s) which need to be acquired and tracked.

Next, the radar image displayed on the display unit 35 during the tracking of the target is described. In Fig. 6, one example of the radar image of this embodiment is illustrated.

In the radar image of Fig. 6, a symbol of the ship (ship symbol) 51, echoes 52, tracking symbols 53, a "determination-is-finished" symbol (determination-finished symbol) 54 are displayed. The ship symbol 51 is a symbol indicative of the position of the ship. The ship symbol 51 may be located at the center, or may be a slightly lower from the center in the radar image.

The echo 52 indicates a reflected wave of the radio wave transmitted from the radar antenna 11. The echo 52 may be generated based on the signal acquired from the signal processor 32, or may be generated based on the information stored in the representative point memory 42.

The tracking symbol 53 is a symbol (mark) given to the target which becomes a subject of the acquisition and the tracking at S108 of the flowchart. Note that lines extending from the tracking symbols 53 indicate the velocity vectors of the targets. Thus, in this embodiment, the tracking targets (that is, the targets determined to have the possibility of a collision with the ship) and the targets (other targets) which are not subjects of tracking are displayed so as to be distinguished from each other. Thus, the user can visually acknowledge the target with the possibility of a collision easily.

The determination-finished symbol 54 is a symbol (mark) given to the target which is determined to satisfy the determination necessity criteria at S103 of the flowchart, but it is also determined to have no possibility of a collision (or the possibility is few) at S105 or S107. For example, since the target "c" is determined to have no possibility of a collision in the processing of S105, the determination-finished symbol 54 is assigned to the target. Thus, in this embodiment, the targets determined by the determinator 44 to have no possibility of a collision with the ship, and the targets which have not been determined by the determinator 44 are displayed so as to be distinguished from each other. The user can feel relieved because he/she can determine whether the targets have already been determined by checking the indications.

Note that the above-described discrimination on displaying the targets may be achieved by assigning symbols, character strings or the like other than the tracking symbols 53 or the determination-finished symbols 54, or the colors or the like of echoes 52 may be changed or altered, as long as these modifications satisfy predetermined criteria.

Note that, in this embodiment, the user can perform a predetermined input through the user interface to automatically suspend the processing which performs the acquisition and the tracking. In this case, the user selects the target(s) manually, and the tracking is carried out for the selected target(s). Alternatively, without determining the collision possibility by the determinator 44, all the targets which entered into the predetermined area may automatically be acquired.

Summarizing the above configuration and functions, the radar device 1 of this embodiment is provided with the extractor 41, the representative point memory 42, the estimator 43, the determinator 44, and the acquisition-and-tracking module 45. The extractor 41 extracts the representative point of the target from the radar echo. The representative point memory 42 stores the representative points extracted by the extractor 41 over a plurality of scans. The estimator 43 estimates the movement information on the target indicated by the representative point, based on the information stored in the representative point memory 42. The determinator 44 determines the possibility of a collision with the ship based on the movement information on the target estimated by the estimator 43. The acquisition-and-tracking module 45 acquires and tracks the target determined to have the possibility of a collision with the ship by the determinator 44.

Thus, only the target with the possibility of a collision, i.e., only the target with a high necessity of tracking, can automatically become the subject of tracking. Therefore, "the processing which excludes the target which does not need to be tracked from the candidates for tracking" can be omitted. Thus, the user's burden or the data to be processed by the processor can be reduced.

Although a suitable embodiment of the present invention is described above, the above configuration may be changed as follows, for example.

In the embodiment, although the components which constitute the radar indicator 12 are integrally arranged inside single casing, at least one of the components may be arranged at a physically-separated location. For example, the sweep memory 31, the signal processor 32, and the TT-processor 33 may be arranged inside a gear box near the radar antenna 11. Further, a storage device connected via a network may also be used as the determination criteria memory 37.

A movable body in which the radar device of the present invention is mounted may not be limited to the ship, and, for example, the radar device may be mounted in an airplane, an automobile, etc.

## Claims

1. A radar device (1), comprising:
an extractor (41) configured to extract a representative point of a target from a radar echo;
a representative point memory (42) configured to store the representative points extracted by the extractor (41), for a plurality of scans;
an estimator (43) configured to estimate movement information on the target indicated by the representative points based on the information stored in the representative point memory (42);
a determinator (44) configured to determine a possibility of a collision based on the movement information on the target estimated by the estimator (43) ; and
an acquisition-and-tracking module (45) configured to acquire and track the target determined to have the possibility of a collision by the determinator (44).

2. The radar device (1) of claim 1, wherein the determinator (1) determines the possibility of a collision based on whether the movement information on the target estimated by the estimator (43) satisfies a predetermined collision possibility determination criterion.

3. The radar device (1) of claim 1 or 2, wherein the determinator (44) determines the possibility of a collision, for the target located within a predetermined determination area.

4. The radar device (1) of claim 3, wherein the predetermined determination area is defined to be an area within a predetermined distance from the radar device (1).

5. The radar device (1) of claim 3, wherein the determination area is defined to be an area specified by a user.

6. The radar device (1) of any one of claims 1 to 5, wherein the movement information on the target includes a course and a speed of the target.

7. The radar device (1) of any one of claims 1 to 6, wherein the representative point memory (42) stores a position of the representative point and a size of the target corresponding to the representative point.

8. The radar device (1) of claim 7, wherein the representative point memory (42) stores a length in an azimuth direction, a length in a distance direction, and an area, along with time information, as the size of the target corresponding to the representative point.

9. The radar device (1) of claim 7 or 8, further comprising an antenna position acquirer (38) configured to acquire a mounted position of a radar antenna (11),
wherein the representative point memory (42) stores an absolute position of each of the representative points that is obtained based on a relative position of the representative point with respect to the radar device (1) and the mounted position of the radar antenna (11).

10. The radar device (1) of any one of claims 1 to 9, wherein the determinator (44) determines the possibility of a collision, for the target, that is determined based on at least one of the size and the movement information.

11. The radar device (1) of claim 10, wherein the determinator (44) determines the possibility of a collision, for the target, that is determined based on the movement information, and
wherein the estimator (43) terminates the estimation of the movement information on the target if there is no possibility of a collision, during the estimation of the movement information on the target while tracing back the past scans.

12. The radar device (1) of any one of claims 1 to 11, further comprising:
a display unit (35) configured to display a radar image; and
a display controller (34) configured to display the target determined to have the possibility of a collision by the determinator (44), in a discriminated manner from another target.

13. The radar device (1) of claim 12, wherein the display controller (34) displays the target determined to have no possibility of a collision by the determinator (44), and the target for which the determination by the determinator (44) has not been carried out, in a discriminated manner from each other.

14. The radar device (1) of any one of claims 1 to 13, wherein one of a mode in which the target determined to have the possibility of a collision by the determinator (44) is acquired and tracked and a mode in which the target is acquired and tracked without the determination by the determinator (44) is configured to be selectable.

15. A method of acquiring and tracking a target, comprising:
extracting a representative point of the target from a radar echo;
storing the extracted representative point over a plurality of scans;
estimating movement information on the target indicated by the representative point, based on the stored information;
determining a possibility of a collision based on the estimated movement information on the target; and
acquiring and tracking the target determined to have the possibility of a collision.
